# EUROPEAN PATENT SPECIFICATION

(11) **EP 3 405 662 B1**
(45) Date of publication and mention of the grant of the patent: **18.11.2020**
(21) Application number: 17701820.7
(22) Date of filing: 18.01.2017
(51) Int. Cl.: F02C 7/055

(54) **PROTECTION SYSTEM FOR A GAS TURBINE AIR INTAKE AND GAS TURBINE PLANT**
SCHUTZSYSTEM FÜR EINEN GASTURBINENLUFTEINLASS UND GASTURBINENANLAGE
SYSTÈME DE PROTECTION D'UNE ADMISSION D'AIR DE TURBINE À GAZ, ET INSTALLATION DE TURBINE À GAZ

(30) Priority: 19.01.2016 IT UB201663155 U
(43) Date of publication of application: 28.11.2018
(73) Proprietor: Nuovo Pignone Tecnologie SrL, 50127 Florence (IT)
(72) Inventor: INNOCENTI, Marco, 50127 Florence (IT); MORGANTI, Riccardo, 50127 Florence (IT); INNOCENTI, Barbara, 50127 Florence (IT)
(74) Representative: Illingworth-Law, William Illingworth
(86) International application number: PCT/EP2017/050968
(87) International publication number: WO 2017/125427

(56) References cited:
- EP-A1- 2 218 490
- WO-A1-2011/072756
- US-A1- 2014 017 068
- US-A1- 2015 089 908

## Description

### TECHNICAL FIELD

Embodiments of the subject matter disclosed herein correspond to protection systems for gas turbine air intakes and gas turbine plants.

### BACKGROUND ART

A gas turbine has an intake for air to be used as oxidant of fuel in its combustor or combustors.

A gas turbine plant typically comprises an air inlet section for delivering air to the air intake of the gas turbine.

EP 2 218 490 A1 discloses a filter latching device for use in a filtering system that provides filtered intake air for a power generation facility.

The air inlet section typically comprises a protection system in order to avoid that large pieces of debris enter the intake of the gas turbine and damage the gas turbine.

It is to be noted that, in the field of Oil & Gas, gas turbines are very expensive and therefore it is important to avoid damages to them.

A protection system for a gas turbine is known from US patent application published as US2015/0089908A1.

This document concentrates on the structure of the protection system and of its screen components. According to the solution of this document, the protection system is secured (e.g. welded) inside an air inlet section and screen components are secured (e.g. welded) to frames of the protection system.

This document does not address the problem of maintaining the protection system, in particular of repairing screen components when damaged by debris.

The structure and the construction of such protection system and of its screen components imply that repairing requires some expertize and a rather long time. During repairing operations of the protection system the gas turbine must be stopped; therefore, a long repair time means a long downtime of the gas turbine plant which is very expensive in the field of Oil & Gas.

### SUMMARY

Therefore, there is a general need for improving protection systems for gas turbine air intakes.

The present invention is defined in the accompanying claims.

Embodiments of the subject matter disclosed herein relate to protection systems for air intakes of gas turbines according to the features of claim 1.

According to such embodiments, the protection system comprises a screen assembly; the screen assembly comprises a framework with a connection part for releasable mounting thereof, and a plurality of screen components releasably mounted to the framework.

Further embodiments of the subject matter disclosed herein relate to gas turbine plants.

According to such further embodiments, the gas turbine plant comprises a gas turbine and a protection system for an air intake of the gas turbine; the protection system comprises a screen assembly; the screen assembly comprises a framework with a connection part for releasable mounting thereof, and one or more screen components releasably mounted to the framework.

### BRIEF DESCRIPTION OF DRAWINGS

The accompanying drawings, which are incorporated herein and constitute an integral part of the present specification, illustrate exemplary embodiments of the present invention and, together with the detailed description, explain these embodiments. In the drawings:
Fig. 1 shows a schematic view of an embodiment of a gas turbine plant with a protection system,
Fig. 2 shows a three-dimensional view of an embodiment of a screen assembly,

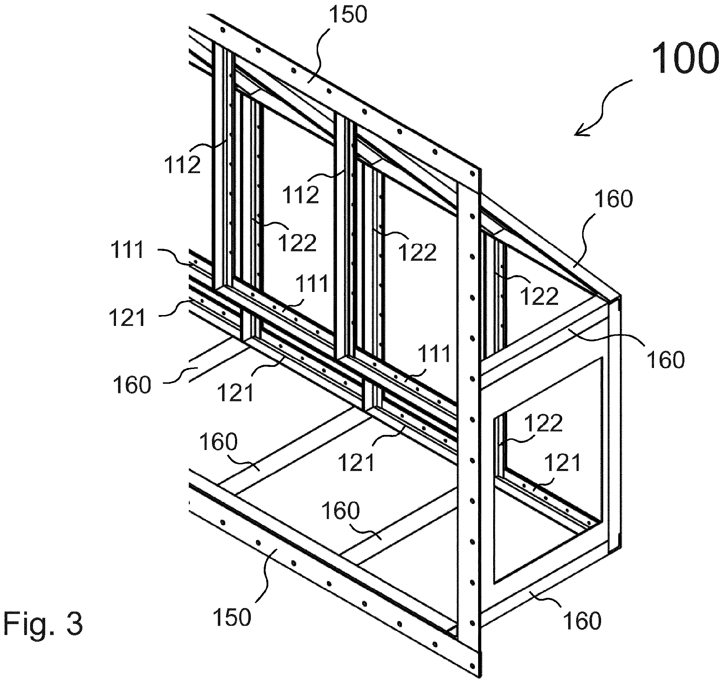

Fig. 3 shows a three-dimensional partial view of an embodiment of a screen assembly (i.e. the one of Fig. 2) without screen components, and
Fig. 4 shows the construction of an embodiment of a protection system with the screen assembly of Fig. 2 being an elbow-shaped feed assembly of an air inlet section for delivering air to an air intake of a gas turbine.

### DETAILED DESCRIPTION

The following description of exemplary embodiments refers to the accompanying drawings.

The following description does not limit the invention. Instead, the scope of the invention is defined by the appended claims.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

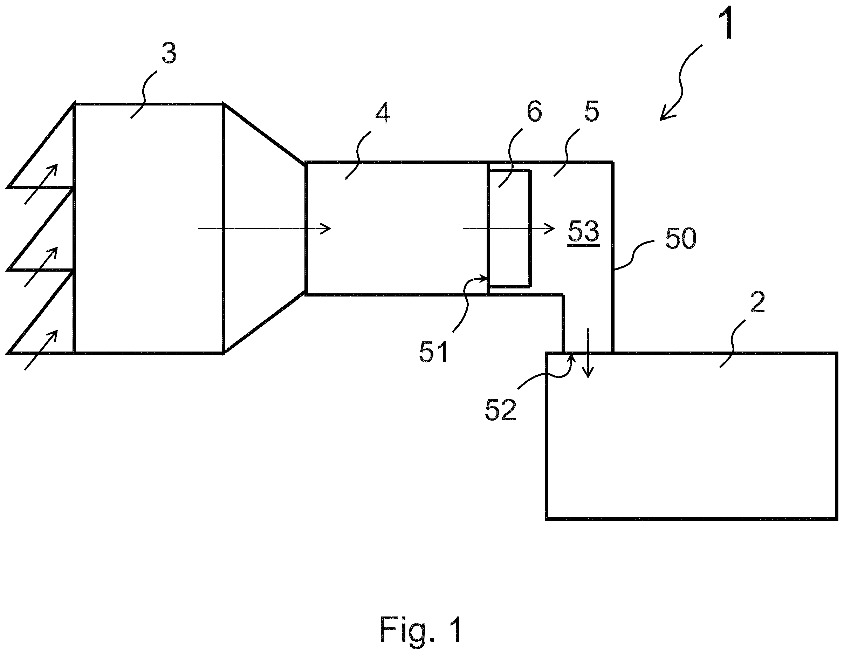

The embodiment of gas turbine plant of Fig. 1 is generally indicated at 1.

The gas turbine plant 1 comprises a gas turbine 2 and, at least, an air inlet section for delivering air to the air intake of the gas turbine 2 (see the arrows in the figure). According to this embodiment, the air inlet section comprises, at least, a filter assembly 3, a silencer assembly 4 and a feed assembly 5; air enters the filter assembly 3, flows first through the filter assembly 3, then through the silencer assembly 4, finally through the feed assembly 5, exits the feed assembly 5 and enters the intake of the gas turbine 2.

The filter assembly 3 is designed to filter air.

The silencer assembly 4 is designed to reduce noise.

The feed assembly 5 is designed to feed air.

In general, a gas turbine plant comprises a gas turbine as well as systems, assemblies and devices connected directly or indirectly to the gas turbine.

According to the plant of Fig. 1, the feed assembly 5 embodies also a protection system comprising a screen assembly 6; the protection system avoids, for example, that debris from silencing panels of the silencer assembly 4 enter the intake of the gas turbine 2.

The feed assembly 5, i.e. the embodiment of protection system, comprises a housing 50 with an air inlet 51, an air outlet 52 and an air duct 53 fluidly connecting the air inlet 51 and the air outlet 52, as well as the screen assembly 6.

According to this embodiment, the housing 50 is elbow-shaped.

According to this embodiment, the screen assembly 6 is located at the air inlet 51.

Screen assembly 6 may have the structure shown in Fig.s 2 and 3; in Fig.s 2 and 3, the screen assembly is generally indicated at 100.

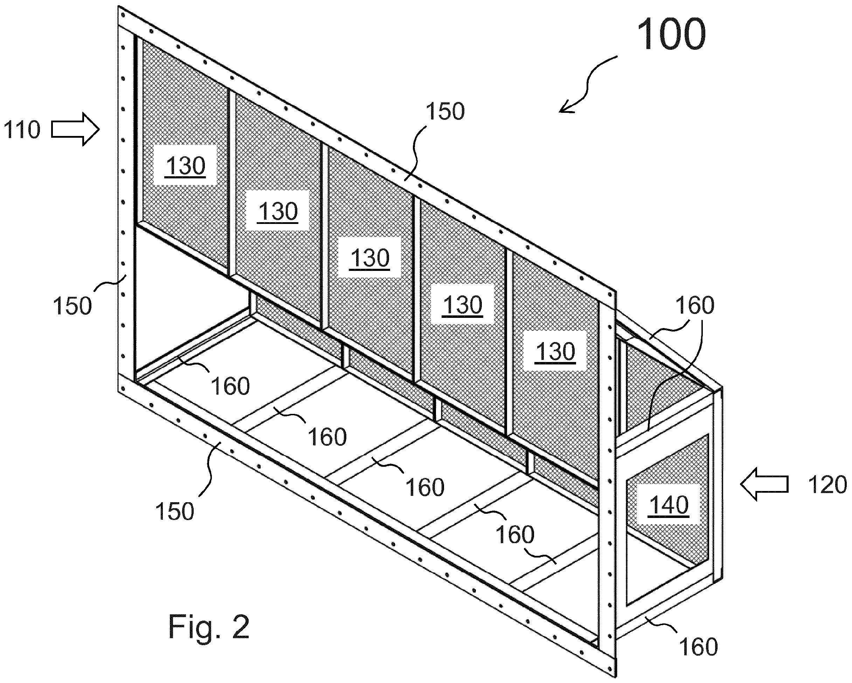

The screen assembly 100 comprises a framework and a plurality of screen components (for example a number in the range from two to twelve) mounted to the framework. In particular, the framework is a supporting framework, more specifically a self-supporting framework. In particular, the screen components are screen panels (labelled 130 and 140 in Fig. 2).

The framework of the screen assembly 100 has at least one connection part for mounting the screen assembly 100 to one or more other components of a gas turbine plant, for example plant 1 of Fig. 1. The connection part may be a flange (labelled 150 in Fig. 2), i.e. a connection flange.

Advantageously, the framework may be easily mounted and dismounted, i.e. are releasably mounted; screws and/or bolts may be used for this purpose.

Advantageously, the screen components may be easily mounted and dismounted, i.e. are releasably mounted; screws and/or bolts may be used for this purpose.

According to the embodiment of Fig. 2, the framework consists of the combination of a flange 150, a first frame 110 and a second frame 120 that are both fixed to the flange 150. The frame 110 is directly fixed to the flange 150. The second frame 120 is indirectly fixed to the flange 150; in particular, it is fixed to the flange 150 through a set of connection bars 160. Therefore, the first frame 110 and the second frame 120 are indirectly fixed to each other.

According to the embodiment of Fig. 2, the first frame 110 is rectangular and consists of the combination of four peripheral bars 111 (fixed together) and a set of cross-bars 112; the second frame 120 is rectangular and consists of the combination of four peripheral bars 121 (fixed together) and a set of cross-bars 122; the first frame 110 and the second frame 120 are identical.

According the embodiment of Fig. 2, the second frame 120 is offset with respect to the first frame 110 both in transversal and longitudinal directions. In particular, considering the flow of the air, the first frame 110 is a front frame and the second frame 120 is a rear frame. In particular, the first frame 110 is an upper frame and the second frame 120 is a lower frame.

According the embodiment of Fig. 2, a first plurality of screen panels 130 (according to this embodiment, five panels) are adjacent to each other; in particular, each of them is releasably mounted to the first frame 110 (peripheral bars 111 and/or cross-bars 112) independently from each other.

According the embodiment of Fig. 2, a second plurality of screen panels 140 (according to this embodiment, five panels) are adjacent to each other; in particular, each of them is releasably mounted to the second frame 120 (peripheral bars 121 and/or cross-bars 122) independently from each other.

Due to the positions of the frames 110 and 120, the second plurality of screen panels 140 is offset with respect to the first plurality of screen panels 130 both in transversal and longitudinal directions.

Advantageously, all the screen panels 130 and 140 are arranged to be dismounted from and mounted to the frames of the framework (thanks to screws and/or bolts) while the framework is mounted; as it will be explained afterwards, at least one opening in the framework and at least one hatch in a housing may be provided for allowing mounting and dismounting.

According the embodiment of Fig. 2, the screen components are screen panels comprising a rectangular peripheral frame and a rectangular portion of wire mesh fixed to the peripheral frame.

Advantageously, the peripheral frame of the screen components is arranged for mounting the screen component to the framework, in particular to the frame or frames of the framework.

Advantageously, all the screen components are identical.

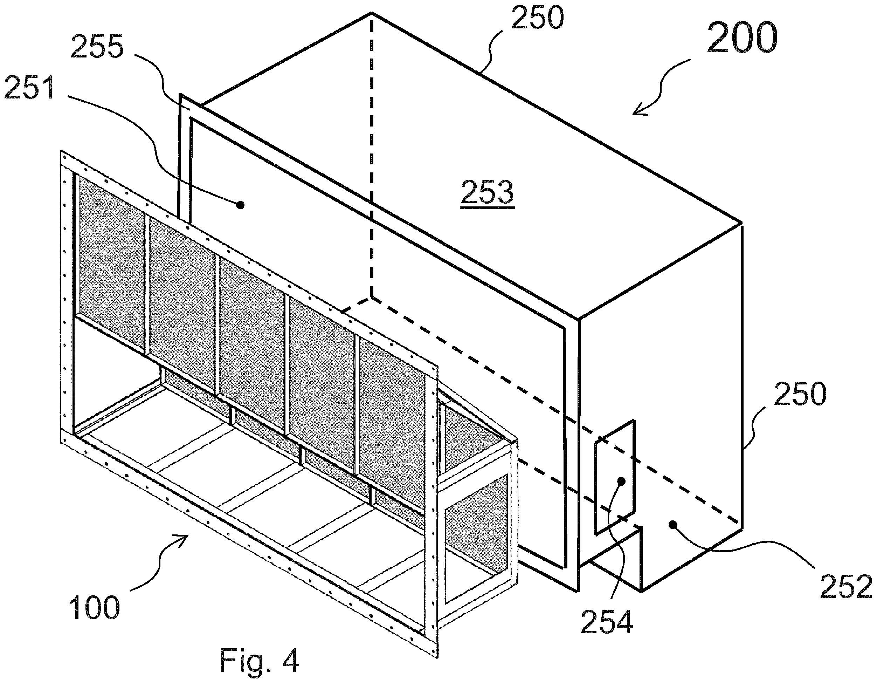

Fig. 4 shows a feed assembly 200 that, similarly to the feed assembly 5 in Fig. 1, embodies also a protection system comprising the screen assembly 100 of Fig.s 2 and 3.

The feed assembly 200, i.e. the embodiment of protection system, comprises a housing 250 with an air inlet 251, an air outlet 252 and an air duct 253 fluidly connecting the air inlet 251 and the air outlet 252, as well as the screen assembly 100. In particular, the housing 250 is elbow-shaped.

The framework of the screen assembly 100 is releasably mounted (for example, by means of screws and/or bolts) to a flange 255 of the air inlet 251; according to an alternative embodiment, for example, the framework of the screen assembly 100 may be releasably mounted to a flange 256 (not shown) of the air outlet 252.

According to the embodiment of Fig. 4, the flange 150 of the screen assembly 100 is mounted between the inlet flange 255 of the feed assembly 200 and an outlet flange of a silencer assembly.

According to the embodiment of Fig. 4, the housing 250 has an inspection hatch 254. The hatch of the housing may be used not only for checking the status of the screen components but also for replacing (or repairing) them in case of damage. The hatch of the housing may be sufficiently large that an operator may totally or partially enter into the housing. Safety reasons strongly recommend against opening the hatch of the housing and even more entering (totally or partially) into the housing while the gas turbine is in operation.

## Claims

1. A protection system for an air intake of a gas turbine, comprising a screen assembly (100), wherein said screen assembly (100) comprises a framework (110, 120, 160) with a connection part (150) for releasable mounting thereof, and a plurality of screen components (130, 140) releasably mounted to said framework (110, 120, 160);
wherein said screen assembly (100) comprises a first plurality of screen components (130) adjacent to each other, each of them being releasably mounted to said framework (110) independently from each other;
wherein said screen assembly comprises a second plurality of screen components (140) adjacent to each other, each of them being releasably mounted to said framework (120) independently from each other; and
wherein said second plurality of screen components (140) is offset with respect to said first plurality of screen components (130) both in transversal and longitudinal directions.

2. The protection system of claim 1, wherein said framework comprises a first frame (110) and a second frame (120) fixed to each other.

3. The protection system of claim 1 or claim 2, wherein said connection part is a flange (150).

4. The protection system of any of claims from 1 to 3, comprising further a housing (250) with an air inlet (251), an air outlet (252) and an air duct (253) fluidly connecting said air inlet (251) and said air outlet (252).

5. The protection system of claim 4, wherein said framework (110, 120, 160) is releasably mounted to a flange (255) of said air inlet or a flange (256) of said air outlet.

6. The protection system of claim 4 or 5, wherein said housing (250) has an inspection hatch (254).

7. The protection system of any of claims from 4 to 6, wherein said housing (250) is elbow-shaped.

8. The protection system of any preceding claim, wherein the or each screen component (130, 140) comprises a peripheral frame and a wire mesh fixed to said peripheral frame, wherein said peripheral frame is arranged for mounting the screen component (130, 140).

9. The protection system of any preceding claim, wherein the or each screen component (130, 140) is arranged to be dismounted and mounted while said framework (110, 120, 160) is mounted.

10. A gas turbine plant (1) comprising a gas turbine (2) and a protection system (5) for an air intake of the gas turbine (2) according to any preceding claim.

11. The gas turbine plant of claim 10, wherein said air inlet (51, 251) is arranged to be fluidly connected to a silencer assembly (4) of the gas turbine plant (1).

12. The gas turbine plant of any claim 10 or claim 11, wherein said air outlet (52, 252) is arranged to be fluidly connected to the air intake of the gas turbine (2).

## Patentansprüche

1. Schutzsystem für einen Lufteinlass einer Gasturbine, umfassend eine Schirmanordnung (100), wobei die Schirmanordnung (100) ein Rahmenwerk (110, 120, 160) mit einem Verbindungsteil (150) zur lösbaren Befestigung davon und eine Vielzahl von Schirmkomponenten (130, 140) umfasst, die lösbar an dem Rahmenwerk (110, 120, 160) befestigt ist;
wobei die Schirmanordnung (100) eine erste Vielzahl von Schirmkomponenten (130) umfasst, die einander benachbart sind, wobei jede davon unabhängig voneinander lösbar an dem Rahmenwerk (110) befestigt ist;
wobei die Schirmanordnung eine zweite Vielzahl von Schirmkomponenten (140) umfasst, die einander benachbart sind, wobei jede davon unabhängig voneinander lösbar an dem Rahmenwerk (120) befestigt ist; und
wobei die zweite Vielzahl von Schirmkomponenten (140) in Bezug auf die erste Vielzahl von Schirmkomponenten (130) sowohl in Querrichtung als auch in Längsrichtung versetzt ist.

2. Schutzsystem nach Anspruch 1, wobei das Rahmenwerk einen ersten Rahmen (110) und einen zweiten Rahmen (120) umfasst, die aneinander befestigt sind.

3. Schutzsystem nach Anspruch 1 oder Anspruch 2, wobei das Verbindungsteil ein Flansch (150) ist.

4. Schutzsystem nach einem der Ansprüche 1 bis 3, ferner umfassend ein Gehäuse (250) mit einem Lufteinlass (251), einem Luftauslass (252) und einem Luftkanal (253), der den Lufteinlass (251) und den Luftauslass (252) fluidisch verbindet.

5. Schutzsystem nach Anspruch 4, wobei das Rahmenwerk (110, 120, 160) lösbar an einem Flansch (255) des Lufteinlasses oder einem Flansch (256) des Luftauslasses befestigt ist.

6. Schutzsystem nach Anspruch 4 oder 5, wobei das Gehäuse (250) eine Inspektionsöffnung (254) aufweist.

7. Schutzsystem nach einem der Ansprüche 4 bis 6, wobei das Gehäuse (250) winkelförmig ist.

8. Schutzsystem nach einem der vorstehenden Ansprüche, wobei die oder jede Schirmkomponente (130, 140) einen Umfangsrahmen und ein Drahtgeflecht umfasst, das an dem Umfangsrahmen befestigt ist, wobei der Umfangsrahmen zum Befestigen der Schirmkomponente (130, 140) ausgelegt ist.

9. Schutzsystem nach einem der vorstehenden Ansprüche, wobei die oder jede Schirmkomponente (130, 140) so angeordnet ist, dass sie abgebaut und befestigt werden kann, während das Rahmenwerk (110, 120, 160) befestigt ist.

10. Gasturbinenanlage (1), umfassend eine Gasturbine (2) und ein Schutzsystem (5) für einen Lufteinlass der Gasturbine (2) nach einem der vorstehenden Ansprüche.

11. Gasturbinenanlage nach Anspruch 10, wobei der Lufteinlass (51, 251) ausgelegt ist, um fluidisch mit einer Schalldämpferbaugruppe (4) der Gasturbinenanlage (1) verbunden zu werden.

12. Gasturbinenanlage nach Anspruch 10 oder Anspruch 11, wobei der Luftauslass (52, 252) ausgelegt ist, um fluidisch mit dem Lufteinlass der Gasturbine (2) verbunden zu werden.

## Revendications

1. Système de protection pour une admission d'air d'une turbine à gaz, comprenant un ensemble tamis (100),
dans lequel ledit ensemble tamis (100) comprend un châssis (110, 120, 160) avec une partie de raccordement (150) pour un montage libérable de celui-ci, et une pluralité de composants de tamis (130, 140) montés de manière libérable audit châssis (110, 120, 160) ;
dans lequel ledit ensemble tamis (100) comprend une première pluralité de composants de tamis (130) les uns à côté des autres, chacun de ceux-ci étant monté de manière libérable audit châssis (110) indépendamment les uns des autres ;
dans lequel ledit ensemble tamis comprend une deuxième pluralité de composants de tamis (140) les uns à côté des autres, chacun de ceux-ci étant monté de manière libérable audit châssis (120) indépendamment les uns des autres ; et
dans lequel ladite deuxième pluralité de composants de tamis (140) est décalée par rapport à ladite première pluralité de composants de tamis (130) à la fois dans les directions transversale et longitudinale.

2. Système de protection selon la revendication 1, dans lequel ledit châssis comprend un premier cadre (110) et un deuxième cadre (120) fixés l'un à l'autre.

3. Système de protection selon la revendication 1 ou la revendication 2, dans lequel ladite partie de raccordement est une bride (150).

4. Système de protection selon l'une quelconque des revendications 1 à 3, comprenant en outre un logement (250) avec une entrée d'air (251), une sortie d'air (252) et un conduit d'air (253) reliant fluidiquement ladite entrée d'air (251) et ladite sortie d'air (252).

5. Système de protection selon la revendication 4, dans lequel ledit châssis (110, 120, 160) est monté de manière libérable à une bride (255) de ladite entrée d'air ou à une bride (256) de ladite sortie d'air.

6. Système de protection selon la revendication 4 ou 5, dans lequel ledit logement (250) a une trappe d'inspection (254).

7. Système de protection selon l'une quelconque des revendications 4 à 6, dans lequel ledit logement (250) est en forme de coude.

8. Système de protection selon une quelconque revendication précédente, dans lequel le ou chaque composant de tamis (130, 140) comprend un cadre périphérique et un treillis métallique fixé audit cadre périphérique, dans lequel ledit cadre périphérique est agencé pour un montage du composant de tamis (130, 140).

9. Système de protection selon une quelconque revendication précédente, dans lequel le ou chaque composant de tamis (130, 140) est agencé pour être démonté et monté alors que ledit châssis (110, 120, 160) est monté.

10. Installation de turbine à gaz (1) comprenant une turbine à gaz (2) et un système de protection (5) pour une admission d'air de la turbine à gaz (2) selon une quelconque revendication précédente.

11. Installation de turbine à gaz selon la revendication 10, dans laquelle ladite entrée d'air (51, 251) est agencée pour être en communication fluidique avec un ensemble silencieux (4) de l'installation de turbine à gaz (1).

12. Installation de turbine à gaz selon l'une quelconque revendication 10 ou revendication 11, dans laquelle ladite sortie d'air (52, 252) est agencée pour être en communication fluidique avec l'admission d'air de la turbine à gaz (2).
